(19) Europäisches Patentamt
European Patent Office
Office européen des brevets

(11) Veröffentlichungsnummer : **0 054 606**
**B1**

(12) # EUROPÄISCHE PATENTSCHRIFT

(45) Veröffentlichungstag der Patentschrift : **28.08.85**

(51) Int. Cl.[4] : **G 21 F 9/06**, C 02 F 1/46

(21) Anmeldenummer : **81104149.0**

(22) Anmeldetag : **30.05.81**

(54) **Verfahren zur Verringerung des Säuregehaltes einer salpetersauren Lösung unter Verwendung eines Elektrolysestromes und Vorrichtung zur Durchführung des Verfahrens.**

(30) Priorität : **19.12.80 DE 3047988**

(43) Veröffentlichungstag der Anmeldung : **30.06.82 Patentblatt 82/26**

(45) Bekanntmachung des Hinweises auf die Patenterteilung : **28.08.85 Patentblatt 85/35**

(84) Benannte Vertragsstaaten : **BE FR GB NL**

(56) Entgegenhaltungen :
**EP-A- 0 054 607**
**DE-A- 2 449 588**
**GB-A- 2 041 975**

(73) Patentinhaber : **Kernforschungszentrum Karlsruhe GmbH**
**Weberstrasse 5**
**D-7500 Karlsruhe 1 (DE)**

(72) Erfinder : **Heilgeist, Michael, Dipl.-Chem.**
**Friedenstrasse 36**
**D-7515 Linkenheim-Ho. (DE)**

**EP 0 054 606 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft ein Verfahren zur Verringerung des Säuregehaltes einer salpetersauren Lösung unter Verwendung eines Elektrolysestromes, der in der Lage ist, $HNO_3$ an der Kathode zu reduzieren.

Auf dem Gebiete der Wiederaufarbeitung bestrahlter Kernbrenn- und/oder Brutstoffe und auf dem Gebiete der Beseitigung radioaktiver Abfälle wurden sowohl chemische als auch elektrochemische Verfahren bekannt, die eine Reduktion von Salpetersäure-Konzentrationen in wäßrigen, radioaktiven Abfall-Lösungen zum Ziel hatten. Beispielsweise wurde vorgeschlagen, wäßrige, mittelradioaktive Abfall-Lösungen (MAW) mit Hilfe des elektrischen Stromes zu denitrieren (M. Heilgeist et al « Reduktion des mittelaktiven Abfalles durch salzfreie Verfahrensschritte » in : Bericht der Kernforschungszentrum Karlsruhe GmbH, Nr. 2940 (März 1980) « Sammlung der Vorträge anläßlich des 3. Statusberichtes des Projektes Wiederaufarbeitung und Abfallbehandlung am 8.11.1979 », Seiten 216 bis 234). Hierbei wird Salpetersäure in einer Elektrolysezelle an der Kathode unter Aufnahme von Elektronen zu Stickstoff-Verbindungen umgewandelt, in denen der Stickstoff eine niedrigere Wertigkeit besitzt. Die folgende Tabelle zeigt die Palette der möglichen Produkte.

| Kathodenprodukt X | Wertigkeit des Stickstoffs | Strombedarf (theor.) [Ah/Mol $HNO_3$] | Standard-EKM [V] X/$HNO_3$ |
|---|---|---|---|
| $NO_2/N_2O_4$ | + 4 | 26,8 | + o,81 |
| $HNO_2$ | + 3 | 53,6 | + o,94 |
| NO | + 2 | 8o,4 | + o,96 |
| $N_2O$ | + 1 | 1o7,2 | + 1,11 |
| $H_2N_2O_2$ | + 1 | 1o7,2 | + o,9 |
| $N_2$ | O | 134 | + 1,24 |
| $NH_3OH^+$ | - 1 | 16o,8 | + o,72 |
| $N_2H_5^+$ | - 2 | 187,6 | + o,82 |
| $NH_4^+$ | - 3 | 214,4 | + o,88 |

Ah = Ampere-Stunden
V = Volt

Ob, welche und in welchem Ausmaß die angeführten Produkte entstehen, hängt ab vom Potential der Kathode, dem Elektrodenmaterial, von eventuell vorhandenen Katalysatoren, der Elektrolyt-Konzentration und dem Zellenaufbau. Als Kathodenmaterial haben sich Titan und Graphit als geeignet erwiesen, und zwar sowohl aufgrund ihrer elektrochemischen Eignung zur Salpetersäurereduktion, als auch aufgrund ihrer niedrigen Korrosionsraten. Die elektrochemische Salpetersäureduktion an Graphit-Kathoden führt wahlweise zu NO oder Ammoniak bzw. Ammoniumionen. Für den Bereich der NO-Produktion wurde eine den Umsatz limitierende relativ niedrige Grenzstromdichte beobachtet. Für $NH_3$ als produkt werden sehr viel höhere Stromdichten erforderlich.

Die Nachteile dieser Verfahrensweise sind darin zu sehen, daß einerseits nitrose Gase entstehen, die in weiteren Verfahrensschritten beseitigt werden müssen und andererseits $NH_3$ gebildet wird, das in der salpetersauren Lösung zu $NH_4NO_3$ (AN) gebunden wird. Auch das AN muß beseitigt werden, da es die Weiterverarbeitung der das AN enthaltenden Abfall-Lösung zu einem endlagerfähigen festen Produkt stört.

Gemäß EP-A-0054607 (gleicher Altersrang) kann AN aus einer wäßrigen Lösung unter Verwendung von Stickstoff-Sauerstoff-Verbindungen oberhalb Raumtemperatur jedoch unterhalb der Siedetemperatur der Lösung entfernt werden. In dieser Druckschrift wird jedoch die Verringerung des Säuregehaltes einer salpetersauren Lösung nicht angesprochen.

Der Erfindung liegt daher die Aufgabe zugrunde, ein Verfahren zu schaffen, mit welchem eine

Verringerung des Säuregehaltes einer salpetersauren Lösung, sowohl einer radioaktiven Lösung als auch einer inaktiven Lösung, in einem kontinuierlichen Prozeß unter Bildung ungiftiger, gasförmiger Zersetzungsprodukte der Salpetersäure durchgeführt werden kann.

Die Aufgabe wird in überraschend einfacher Weise erfindungsgemäß dadurch gelöst, daß

a) die salpetersaure Lösung in einen ersten Volumenanteil und einen zweiten Volumenanteil aufgeteilt wird,

b) der erste Volumenanteil in an sich bekannter Weise elektrolytisch zu Ammoniumnitrat (AN) reduziert wird,

c) der zweite Volumenanteil in an sich bekannter Weise elektrolytisch zu nitrosen Gasen $NO_x$, im wesentlichen zu NO und/oder $NO_2$, reduziert wird und daß

d) die Reaktionsprodukte aus Schritt b) und Schritt c) zusammengeführt und bei einer Temperatur im Bereich von 50 °C bis unterhalb des Siedepunktes der die Reaktionsprodukte enthaltenden bzw. aufnehmenden Lösung durch Erwärmen der Lösung reagieren gelassen werden.

Eine Ausbildungsform für das erfindungsgemäße Verfahren ist dadurch gekennzeichnet, daß man die aus dem ersten Volumenanteil der salpetersauren Lösung in einer ersten Elektrolysezelle erzeugte AN-Lösung und das aus dem zweiten Volumenanteil der salpetersauren Lösung in einer zweiten Elektrolysezelle erzeugte und aus der Zelle abgeleitete, NO und/oder $NO_2$ enthaltende Gas im Gegenstrom durch einen mit Raschigringen gefüllten und durch einen Thermostatenmantel beheizten Rohrreaktor hindurchführt und bei einer Temperatur im Bereich zwischen 50 °C und 100 °C reagieren läßt.

In einer anderen vorteilhaften Ausbildung der Erfindung wird die Aufgabe dadurch gelöst, daß man den ersten Volumenanteil der Salpetersauren Lösung an einer ersten Kathode, den zweiten Volumenanteil der salpetersauren Lösung an einer zweiten Kathode in einer gemeinsamen Elektrolysezelle mit einer einzigen durch ein Diaphragma von den Kathoden getrennten Anode reduziert und den Elektrolyten während der elektrolytischen Reduktion auf eine Temperatur im Bereich zwischen 50° und 100 °C erwärmt.

Die Durchführung des Verfahrens erfolgt gemäß der Erfindung in einer Vorrichtung, bei welcher als Anodenmaterial platin oder platinisiertes Tantal und als Kathodenmaterial Graphit verwendet wird, die gekennzeichnet ist durch eine mit zwei Kathoden unterschiedlicher Form und mit einer durch eine Diaphragma von den beiden Kathoden getrennten Anode ausgestattete Elektrolysezelle.

Eine vorteilhafte Ausbildung der erfindungsgemäßen Vorrichtung ist dadurch gekennzeichnet, daß die eine Kathode aus einem Stab, die andere Kathode aus einem Körner-Schüttbett und das Diaphragma aus einem Glasfritten- oder aus einem porösen Keramikkörper bestehen.

Die Reaktion zwischen den nitrosen Gasen und dem Ammoniumnitrat führt intermediär zu Ammoniumnitrit $NH_4\ NO_2$, das sich bei der erhöhten Temperatur der Lösung nach der folgenden Gleichung zersetzt:

$$NH_4NO_2 = N_2 + 2\ H_2O$$

Die Vorteile des erfindungsgemäßen Verfahrens sind darin zusehen, daß ein leicht regelbarer, kontinuierlicher Prozeßablauf gewährleistet ist und sich als Denitrierungsprodukte die ungiftigen Gase $N_2$ und $N_2O$ bilden.

Im folgenden wird die Erfindung anhand einiger Beispiele und anhand zweier schematischer Zeichnungen näher erläutert, ohne jedoch auf die Zeichnungen bzw. die Beispiele beschränkt zu sein.

Beispiel 1

Produktion von $NH_4^+/NH_3$ und $NO_x$ in zwei getrennten Elektrolysezellen und Zusammenführung der Produktströme in einem Reaktor.

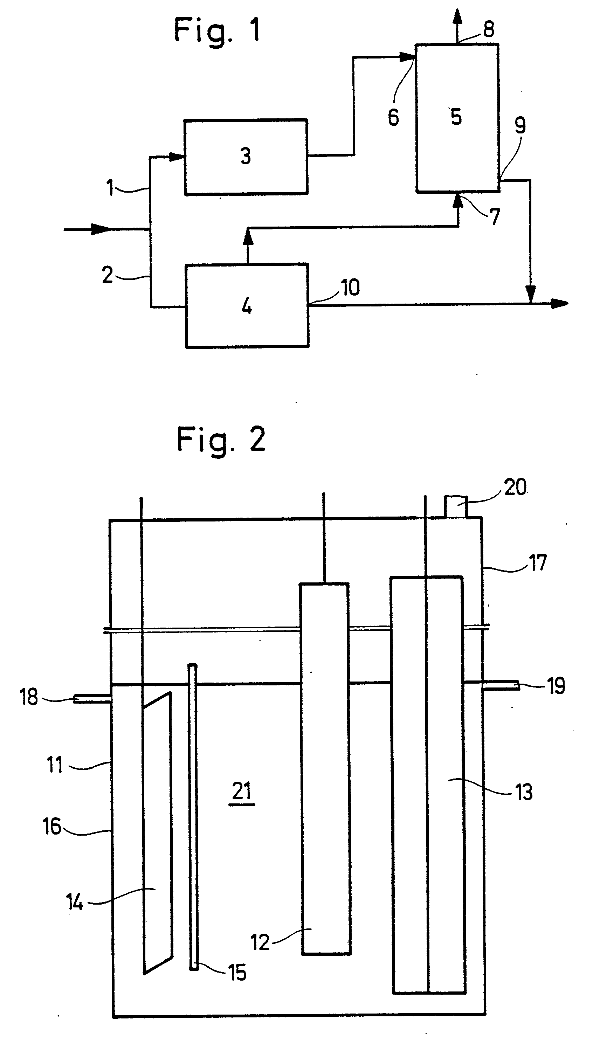

Figur 1 zeigt ein Verfahrensschema, nach welchem der salpetersaure Elektrolyt in einen Teilstrom 1 und einen Teilstrom 2 aufgeteilt wird, wonach der Teilstrom 1 einen $NH_3/NH_4^+$-Reaktor bzw. eine-Produktionszelle 3 durchströmt und der Teilstrom 2 einen $No_x$-Reaktor bzw. eine NO-Produktionszelle 4 durchfließt. Das Denitrierungsprodukt $NH_4NO_3$-Lösung mit einem geringen Gehalt an $HNO_3$ aus dem Reaktor 3 wird an einer Eingangsstelle 6 dem $NH_4^+$-NO-Reaktor 5 zugeführt, das $NO_x$-Gas aus Reaktor 4 an der Stelle 7 des Reaktors 5 eingeführt. Die Reaktionsprodukte $N_2$ und $N_2O$ verlassen den Reaktor 5 an der Stelle 8 als ungiftige Abgase. Die denitrierte Lösung wird an der Stelle 9 des Reaktors 5 abgezogen, die entsprechend denitrierte Lösung aus dem Reaktor 4 an der Stelle lo. Die denitrierten Lösungen werden gemeinsam weiterbehandelt.

Es folgt die Beschreibung der Verfahrensschritte:

a) Ammoniumnitrat (AN)-Produktionszelle 3 (Verfahrensschritt b):

Elektrolyt 1: MAW-Simulat, 2,7 Mol/l $HNO_3$, 1,3 Mol/l $NaNO_3$,$Cu^{2+}$-Ionen 10 mg/l als Katalysatorionen. ($Cu^{2+}$ steht auch für Zusammensetzung der Metallionen im MAW, der ebenso katalytisch wirkt.)

Fluß Q = 0,125 l/h

I = 50 Ampere ; Kathodenstromdichte : 88 mA/cm$^2$
Zellenaufbau :
Durchflußzelle, Kathode + Gehäuse Graphit, 568 cm$^2$
Anode : platiniertes Tantal, 1 890 cm$^2$
Denitrierungsprodukt : 1,1 Mol/l AN, 0,1 Mol/l $HNO_3$
Umsatz : 0,14 Mol/h AN ; Stromausbeute bezüglich $NH_4^+/NH_3$ = 60 %.
b) NO-Produktionszelle 4 (Verfahrensschritt c) :
Elektrolyt 2 : 2,7 Mol/l $HNO_3$ (Katalysatoren oder Kationen des MAW stören den Prozeß nicht)
Diskontinuierliche Prozeßführung : Elektrolytvorrat 3 l.
I = 54 Ampere, mittlere Kathodenstromdichte 20 mA/cm$^2$.
Zellenaufbau :
Durchflußzelle, Kathode : Schüttbett aus Graphitkörnern, Bettdicke 2 cm ;
Diaphragma : poröse Keramik ; Anode ; platiniertes Tantal.
Durchflußrate durch Zelle ; 20 l/h.
NO-Produktionsrate : 0,5 Mol/h ; Restgehalt an $HNO_3$ : ca.0,1 Mol/l ; Stromausbeute ca. 75 %.
c) $NH_4^+$ – NO – Reaktor 5 (Verfahrensschritt d) :
Ein mit Raschigringen gefüllter Rohrreaktor wird kontinuierlich von oben mit dem Produktstrom der AN-Zelle durchströmt während das Kathodengasprodukt der NO-Zelle den Rohrreaktor von unten beaufschlägt.
Reaktionstemperatur : 90 °C, durch Thermostatenmantel beheizt.
Reaktionsprodukt :
Elektrolyt : 0,3 Mol/l AN, 0,4 Mol/l $HNO_3$
AN-Umsatz = 73%
Abgas : NO-Verbrauch 0,35 M/h, Umsatz 70%
Als Reaktionsprodukte wurden $N_2$ und $N_2O$ im Verhältnis 4 : 1 bestimmt.

## Beispiel 2

Produktion von AN und $NO_x$ in einer gemeinsamen Elektrolysezelle, wie sie in Figur 2 schematisch dargestellt ist. In einer Elektrolysezelle 11, die aus einem keramischen Zellenkörper 16 und einer Abdeckhaube 17, sowie aus zwei Kathoden 12 und 13, einer Anode 14 und einem Diaphragma 15 besteht, wobei an der Kathode 12 mit hoher Stromdichte AN, an der ebenfalls als Kathode 13 geschalteten Elektrode mit niedriger Stromdichte $NO_x$ produziert wird, werden die Stromdichten so gehalten, daß die bestimmten Potentiale der Kathoden weitgehend konstant bleiben. Durch die Einlauföffnung 18 wird die zu behandelnde, Salpetersäure enthaltende Lösung in die Elektrolysezelle 11 eingegeben und die denitrierte Lösung an der Auslauföffnung 19 wieder abgezogen. Das Abgas wird durch die Abgasöffnung 20 in der Abdeckhaube 17 abgenommen und weitergeleitet. Als gemeinsame Anode 14 kann ein platiniertes Metall mit Ventileigenschaften, wie z. B. Titan, Niob oder Tantal etc., verwendet werden.
Elektrolyt 21 : 1,5 M $HNO_3$+$Cu^{2+}$, 10 mg/l
Fluß Q = 0,1 l/h
Zellenaufbau : Durchflußzelle, Zellkörper 16 : Keramik, Anode 14 : platiniertes Tantal ;
AN-produzierende Kathode 12 : Graphitstab, 67 cm$^2$, I = 10 Ampere
$NO_x$-produzierende Kathode 13 : Schüttbett aus Graphitkörnern, I = 10 Ampere, Schüttbettdicke 2 cm, mittlere Stromdichte 20 mA/cm$^2$.
Diaphragma 15, bestehend aus einer Glasfritte oder aus einem porösen Keramikkörper, zwischen Anode und Kathoden, um Rückoxidation von $NO_x$ und $HNO_2$ an der Anode zu vermeiden.
Gesamtstrom : 20 Ampere
Reaktionstemperatur : 90 °C
Reaktionsprodukt am Zellenauslauf im Gleichgewicht :
0,12 Mol/l $HNO_3$, 0,15 Mol/l $NH_4NO_3$
Umsatz für $HNO_3$ = 92%

| Abgaszusammensetzung : | $O_2$ | $NO_2$ | NO | $H_2$ | $N_2$ | $N_2O$ |
|---|---|---|---|---|---|---|
| l/h | 3,8 | 0,7 | 0,1 | 3,1 | 0,48 | 0,11 |

## Patentansprüche

1. Verfahren zur Verringerung des Säuregehaltes einer salpetersauren Lösung unter Verwendung eines Elektrolysestromes, der in der Lage ist, $HNO_3$ an der Kathode zu reduzieren, dadurch gekennzeichnet, daß

a) die salpetersaure Lösung in einen ersten Volumenanteil und einen zweiten Volumenanteil aufgeteilt wird,

b) der erste Volumenanteil in an sich bekannter Weise elektrolytisch zu Ammoniumnitrat (AN) reduziert wird,

c) der zweite Volumenanteil in an sich bekannter Weise elektrolytisch zu nitrosen Gasen $NO_x$, im wesentlichen zu NO und/oder $NO_2$ reduziert wird und daß

d) die Reaktionsprodukte aus Schritt b) und Schritt c) zusammengeführt und bei einer Temperatur im Bereich von 50 °C bis unterhalb des Siedepunktes der die Reaktionsprodukte enthaltenden bzw. aufnehmenden Lösung durch Erwärmen der Lösung reagieren gelassen werden.

2. Verfahren nach Anspruch 1, dadurch gekennzeichnet, daß man die aus dem ersten Volumenanteil der salpetersauren Lösung in einer ersten Elektrolysezelle erzeugte AN-Lösung und das aus dem zweiten Volumenanteil der salpetersauren Lösung in einer zweiten Elektrolysezelle erzeugte und aus der Zelle abgeleitete, NO und/oder $NO_2$ enthaltende Gas im Gegenstrom duch einen mit Raschigringen gefüllten und durch einen Thermostatenmantel beheizten Rohrreaktor hindurchführt und bei einer Temperatur im Bereich zwischen 50 °C und 100 °C reagieren läßt.

3. Verfahren nach Anspruch 1, dadurch gekennzeichnet, daß man den ersten Volumenanteil der salpetersauren Lösung an einer ersten Kathode, den zweiten Volumenantel der salpetersauren Lösung an einer zweiten Kathode in einer gemeinsamen Elektrolysezelle mit einer einzigen durch ein Diaphragma von den Kathoden getrennten Anode reduziert und den Elektrolyten während der elektrolytischen Reduktion auf eine Temperatur in Bereich zwischen 50 °C und 100 °C erwärmt.

4. Vorrichtung zur Durchführung des Verfahrens nach Anspruch 1 oder 3, bei welcher als Anodenmaterial Platin oder platinisiertes Tantal und als Kathodenmaterial Graphit verwendet wird, gekennzeichnet durch eine mit zwei Kathoden (12, 13) unterschiedlicher Form und mit einer durch ein Diaphragma (15) von den beiden Kathoden getrennten Anode (14) ausgestattete Elektrolysezelle (11).

5. Vorrichtung nach anspruch 4, dadurch gekennzeichnet, daß die eine Kathode (12) aus einem Stab, die andere Kathode (13) aus einem Körner-Schüttbett und das Diaphragma aus einem Glasfritten- oder aus einem porösen Keramikkörper bestehen.

## Claims

1. Process for reducing the acid content of a nitric acid solution by using an electrolysis current which is capable of reducing $HNO_3$ at the cathode, comprising

a) dividing the nitric acid solution into a first volume portion and a second volume portion ;

b) reducing the first volume electrolytically in the familiar way to form ammonium nitrate (AN) ;

c) reducing the second volume portion electrolytically in the familiar way to form nitrous gases $NO_x$, essentially NO and/or $NO_2$ ; and

d) bringing together the reaction products from step b) and step c) and reacting them at a temperature in the range from 50 °C to below the boiling point of the solution containing and accepting, respectively, the reaction products by heating the resulting solution.

2. Process as defined in Claim 1, wherein the AN solution obtained from the first volume portion of the nitric acid solution in a first electrolysis cell and the NO and/or $NO_2$ containing gas obtained from the second volume portion of the nitric acid solution in a second electrolysis cell and discharged from the cell are conducted in counter-current through a tubular reactor which is filled with Raschig rings and heated through a thermostat jacket, and the AN-solution and discharged gas in the tubular reactor are reacted at a temperature in the range between 50 °C and 100 °C.

3. Process as defined in Claim 1, wherein the first volume portion of the nitric acid solution is reduced at a first cathode, the second volume portion of the nitric acid solution is reduced at a second cathode in a common electrolysis cell having a single anode which is separated from the cathodes by a diaphragm, and the electrolyte is heated during the electrolytic reduction to a temperature in the range between 50 °C and 100 °C.

4. Device for implementing the procedure as defined in Claim 1 or 3 comprising platinum or platinized tantalum as the anode material and graphite as the cathode material, wherein an electrolysis cell (11) is equipped with two cathodes (12, 13) different in shape and with an anode (14) separated from the two cathodes by a diaphragm (15).

5. Device as defined in Claim 4 wherein one cathode (12) is made of a rod, the other cathode (13) is made of a bed of loose grains and the diaphragm consists of a glass frit or a porous ceramic body.

## Revendications

1. Procédé pour diminuer la teneur en acide d'une solution d'acide nitrique par utilisation d'un courant d'électrolyse qui est capable de réduire $HNO_3$ à la cathode, caractérisé en ce que :

a) la solution d'acide nitrique est divisée en une première partie en volume, et une seconde partie en volume,

b) la première partie en volume est réduite, d'une façon connue, par électrolyse, en nitrate d'ammonium (AN),

c) la seconde partie en volume est réduite, d'une façon connue, par électrolyse, en gaz nitreux $NO_x$, essentiellement en NO et/ou $NO_2$, et

d) les produits de la réaction des étapes b) et c) sont réunis et on les fait réagir ensemble, à une température d'un ordre de 50 °C jusqu'en dessous du point d'ébullition de la solution contenant les produits de la réaction ou les recevant, en chauffant cette solution.

2. Procédé suivant la revendication 1, caractérisé en ce que l'on fait passer la solution d'AN, produite à partir de la première partie en volume de la solution d'acide nitrique, dans une première cellule d'électrolyse, et les gaz qui sont produits à partir de la seconde partie en volume de la solution d'acide nitrique dans une seconde cellule d'électrolyse, contenant NO et/ou $NO_2$ et dérivés de cette cellule, à contre-courant dans un réacteur tubulaire, rempli d'anneaux de Raschig, et chauffé par une enveloppe thermostatique, et les fait réagir à une température d'un ordre de grandeur de 50 à 100 °C.

3. Procédé suivant la revendication 1, caractérisé en ce que l'on réduit la première partie en volume de la solution d'acide nitrique sur une première cathode, la seconde partie en volume de cette solution sur une seconde cathode, dans une cellule d'électrolyse commune, avec une anode unique séparée des cahtodes par un diaphragme, et chauffe les électrolytes pendant la réduction électrolytique, à une température d'un ordre de grandeur de 50 à 100 °C.

4. Dispositif pour l'exécution du procédé suivant l'une des revendications 1 ou 3, dans lequel on utilise, comme matière pour l'anode, du platine ou du tantale platiné, et le graphite comme matière pour la cathode, caractérisé par une cellule d'électrolyse (11) comportant deux cathodes (12, 13), de formes différentes, et une anode (14) séparée des deux cathodes par un diaphragme (15).

5. Dispositif suivant la revendication 4, caractérisé en ce que l'une des cathodes (12) est constituée par un barreau, l'autre cathode (13), par un lit turbulent de grains, et le diaphragme (15), par une fritte de verre ou un corps céramique poreux.

Fig. 1

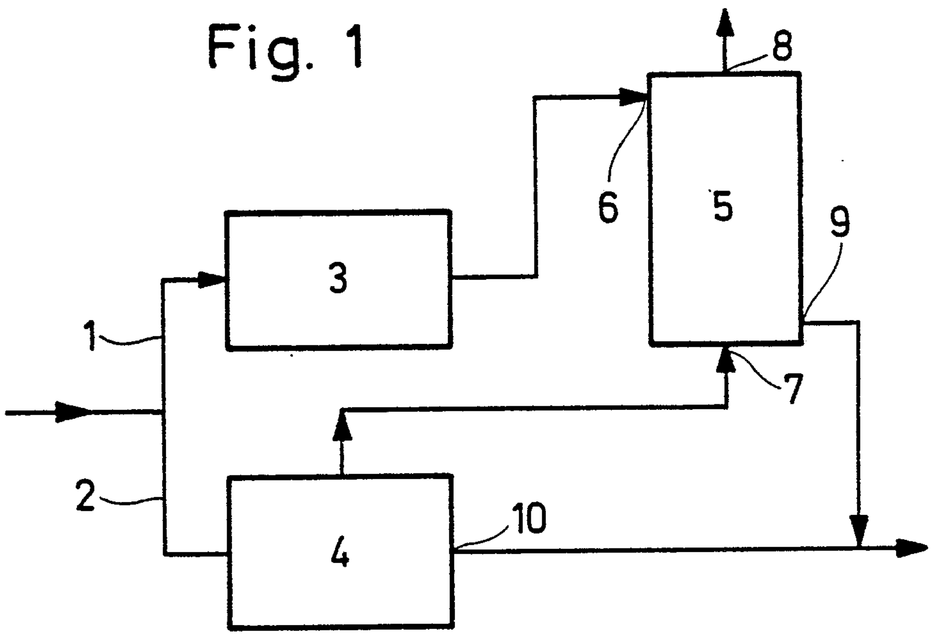


Fig. 2